# EUROPÄISCHE PATENTANMELDUNG

(11) **EP 1 215 405 A2**
(43) Veröffentlichungstag der Anmeldung: **19.06.2002**
(21) Anmeldenummer: 01128792.7
(22) Anmeldetag: 04.12.2001
(51) Int. Cl.: F16B 45/00

(54) **Haltevorrichtung mit wenigstens einer Funktionshalterung**

(30) Priorität: 14.12.2000 DE 10063726
(71) Anmelder: BOS GmbH & Co. KG, 73760 Ostfildern (DE)
(72) Erfinder: Papp, Zoltan, 9228 Halaszi (HU)
(74) Vertreter: Patentanwälte , Ruff, Wilhelm, Beier, Dauster & Partner

(57) **Zusammenfassung**

Eine Haltevorrichtung mit wenigstens einer Funktionshalterung, an der auf Zug belastete Befestigungsmittel festlegbar sind, sowie mit einer Sicherungseinheit zum Montieren der Haltevorrichtung in einer stationären Aufnahme, wobei die Sicherungseinheit wenigstens zwei zueinander beabstandete Rastnasen aufweist, die im montierten Zustand korrespondierende Randabschnitte der Aufnahme hintergreifen, ist bekannt.
Erfindungsgemäß sind die Rastnasen (9) an elastisch beweglichen Tragschenkeln (8) angeordnet, die über einen zumindest im montierten Zustand formsteifen Querträger (7) miteinander verbunden sind, und die Erstreckung der Aufnahme (3) zwischen den Randabschnitten (11) ist kleiner als die gleichgerichtete Abmessung des Querabschnittes (7).
Einsatz für einen Laderaum eines Personenkraftwagens.

## Beschreibung

Die Erfindung betrifft eine Haltevorrichtung mit wenigstens einer Funktionshalterung, an der auf Zug belastete Befestigungsmittel festlegbar sind, sowie mit einer Sicherungseinheit zum Montieren der Haltevorrichtung in einer stationären Aufnahme, wobei die Sicherungseinheit wenigstens zwei zueinander beabstandete Rastnasen aufweist, die im montierten Zustand korrespondierende Randabschnitte der Aufnahme hintergreifen.

Derartige Haltevorrichtungen sind insbesondere als Halteclipse in vielfältigen Formen allgemein bekannt. Problematisch bei derartigen Halteclipsen kann es sein, dass diese bei hohen Zugbelastungen durch ein entsprechend angreifendes Befestigungsmittel aus der Aufnahme ausreißen.

Aufgabe der Erfindung ist es, eine Haltevorrichtung der eingangs genannten Art zu schaffen, die einen sicheren Rückhalt der Haltevorrichtung in der entsprechenden Aufnahme auch bei größeren Zugbelastungen bietet.

Diese Aufgabe wird dadurch gelöst, dass die Rastnasen an elastisch beweglichen Tragschenkeln angeordnet sind, die über einen zumindest im montierten Zustand formsteifen Querabschnitt miteinander verbunden sind, und dass die Erstreckung der Aufnahme zwischen den Randabschnitten kleiner ist als die gleichgerichtete Abmessung des Querabschnittes. Die Formulierung, dass der Querabschnitt zumindest im montierten Zustand formsteif ist, berücksichtigt, dass der Querabschnitt zum einen selbst formsteif gestaltet sein kann und zum anderen auch indirekt in der montierten Position formsteif dadurch sein kann, dass ein zusätzlicher, entsprechend flächig angreifender, formstabiler Stützkörper die entsprechende formsteife Funktion des Querabschnittes erzielt. Durch die erfindungsgemäße Lösung ist gewährleistet, dass die Schwenkpunkte der Tragschenkel, die durch die Länge des Querabschnittes definiert sind, in jedem Fall weiter außen liegen als die entsprechenden Hinterschnittbereiche der Rastnasen - auf eine imaginäre Mittellängsachse der Haltevorrichtung bezogen. Bei Zugbelastungen auf die Haltevorrichtung im montierten Zustand sind somit auf die Tragschenkel nach außen wirkende Drehmomente wirksam, die zwangsläufig die Rastnasen und die Tragschenkel von innen nach außen gegen die Randabschnitte der Aufnahme drücken, so dass sich bei einer Zugbelastung auf die Haltevorrichtung die Rastkräfte der Rastnasen in der Aufnahme verstärken.

Besonders vorteilhaft wird die erfindungsgemäße Haltevorrichtung im Laderaum von Personenkraftwagen eingesetzt, wobei im Fahrzeugboden oder in den Seitenwänden entsprechende Schienen vorgesehen sein können, die mit den Aufnahmen zur Festlegung der Haltevorrichtung versehen sein können.

In Ausgestaltung der Erfindung sind der formsteife Querabschnitt, die Tragschenkel und die Rastnasen als einstückiges Bügelelement gestaltet. Besonders vorteilhaft ist das Bügelelement aus Kunststoff hergestellt. Dadurch ist eine einfache und kostengünstige Ausführung erzielbar, wobei über die Materialwahl des Kunststoffes auch die entsprechenden, für den jeweiligen Einsatzfall vorgesehenen Anforderungen erfüllt werden können.

In weiterer Ausgestaltung der Erfindung ist an dem Bügelelement die wenigstens eine Funktionshalterung einstückig angeformt. Bei dieser Ausführung besteht somit die gesamte Haltevorrichtung aus lediglich einem einzelnen, einstückigen Bauteil, das vorzugsweise aus Kunststoff hergestellt ist. Dadurch wird ein vielseitig einsetzbarer Halteclip geschaffen.

In weiterer Ausgestaltung der Erfindung weist das Bügelelement als Funktionshalterung ein Befestigungsauge auf, das durch einen Freiraum unterhalb des Querabschnittes und zwischen den Tragschenkeln gebildet ist. An diesem Befestigungsauge können Schlaufen oder Haken entsprechender Befestigungsmittel durchgezogen oder eingehängt werden.

In weiterer Ausgestaltung der Erfindung weist der formsteife Querabschnitt eine größere Materialstärke auf als die Tragschenkel. Dadurch wird mit besonders einfachen Mitteln die gegenüber den Tragschenkeln erhöhte Formsteifigkeit des Querabschnittes erzielt.

Die erhöhte Formsteifigkeit des Querabschnittes ist notwendig, um die bei einer Zugbelastung selbstsperrende Funktion der Haltevorrichtung zu erzielen.

In weiterer Ausgestaltung der Erfindung weist die Aufnahme einen rotationsunsymmetrischen Durchtrittsquerschnitt auf, und die Rastnasen sind derart formschlüssig an den Durchtrittsquerschnitt angepasst, dass die Rastnasen im montierten Zustand - bezogen auf eine Mittelachse der Aufnahme - verdrehgesichert in der Aufnahme gehalten sind. Dadurch ist eine positionsgenaue Montage der Haltevorrichtung ermöglicht. In der montierten Position ist die Haltevorrichtung somit unabhängig von der auftretenden Zugbelastung blockiert. Vorzugsweise ist der Durchtrittsquerschnittes polygonal gestaltet und die Rastnasen sind auf die Ränder des polygonalen Durchtrittsquerschnittes entsprechend abgestimmt. Ein besonders bevorzugtes Ausführungsbeispiel weist einen quadratischen Durchtrittsquerschnitt auf. Auch die Rastnasen sind demzufolge im Querschnitt entsprechend rechteckig gestaltet.

Im weiterer Ausgestaltung der Erfindung ist die Funktionshalterung an einem zu dem Bügelelement getrennten Stützelement angeformt, das mit einem bodenseitigen Stützbereich zur Auflage auf den Randabschnitten der Aufnahme versehen ist, und das Bügelelement übergreift das Stützelement im montierten Zustand. Dadurch wird eine zweiteilige Haltevorrichtung geschaffen, wodurch insbesondere für die Gestaltung der Funktionshalterung vergrößerte Möglichkeiten gegeben sind.

In weiterer Ausgestaltung der Erfindung weist das Stützelement einen Stützkörperabschnitt auf, der im montierten Zustand für den Querabschnitt des Bügelelementes eine flächige, formsteife Auflage bildet. Die erfindungsgemäße Funktion, dass bei Zugbelastungen die Rastkraft der Rastnasen in der Aufnahme verstärkt wird, wird bei dieser Ausgestaltung somit durch eine indirekte Versteifung des Querabschnittes mittels des Stützkörperabschnittes erzielt.

In weiterer Ausgestaltung der Erfindung ist das Bügelelement räumlich in dem Stützelement integriert. Dadurch wird eine platzsparende und optisch ansprechende Ausgestaltung geschaffen. Durch die räumliche Integration wird zudem eine gegenseitige formschlüssige Stützung und Versteifung zwischen Bügelelement und Stützelement geschaffen, die die Funktion der Haltevorrichtung verbessern.

In weiterer Ausgestaltung der Erfindung ist das Stützelement aus Kunststoff hergestellt. Dadurch kann auch die zweiteilige Haltevorrichtung kostengünstig und in hohen Stückzahlen hergestellt werden, wodurch sich der Einsatz insbesondere im Kraftfahrzeugbereich anbietet.

Weitere Vorteile und Merkmale der Erfindung ergeben sich aus den Ansprüchen sowie aus der nachfolgenden Beschreibung von bevorzugten Ausführungsbeispielen der Erfindung, die anhand der Zeichnungen dargestellt sind.
- Fig. 1: zeigt in perspektivischer Darstellung einen Ausschnitt eines Laderaumbodens eines Kraftfahrzeugs, bei der ein Sicherungsnetz mit einer Ausführungsform einer erfindungsgemäßen Haltevorrichtung am Laderaumboden befestigt ist,
- Fig. 2: in vergrößerter Darstellung einen Montage- oder Demontagevorgang der Haltevorrichtung nach Fig. 1,
- Fig. 3: die Haltevorrichtung nach den Fig. 1 und 2 in montiertem Zustand,
- Fig. 4: in vergrößerter, perspektivischer Darstellung eine weitere Ausführungsform einer erfindungsgemäßen Haltevorrichtung, die ebenfalls zur Befestigung von Funktionsteilen in einem Fahrzeuginnenraum dient,
- Fig. 5: einen Längsschnitt durch die Haltevorrichtung nach Fig. 4,
- Fig. 6a: in vergrößerter, perspektivischer Darstellung eine weitere Ausführungsform einer erfindungsgemäßen Haltevorrichtung,
- Fig. 6b: schematisch in einer Draufsicht eine Durchtrittsöffnung in einem Laderaumboden zur Aufnahme einer Haltevorrichtung gemäß Fig. 6a,
- Fig. 7: in verkleinerter Darstellung die Haltevorrichtung nach Fig. 6a in einer Seitenansicht,
- Fig. 8: die Haltevorrichtung nach Fig. 7 in einer Frontansicht,

- Fig. 9: die Haltevorrichtung nach den Fig. 7 und 8 in einer Schnittdarstellung entlang der Schnittlinie IX-IX in Fig. 8,
- Fig. 10: die Haltevorrichtung nach den Fig. 7 bis 9 in einer Ansicht von unten und
- Fig. 11: die Haltevorrichtung nach den Fig. 7 bis 10 in einer Ansicht von oben.

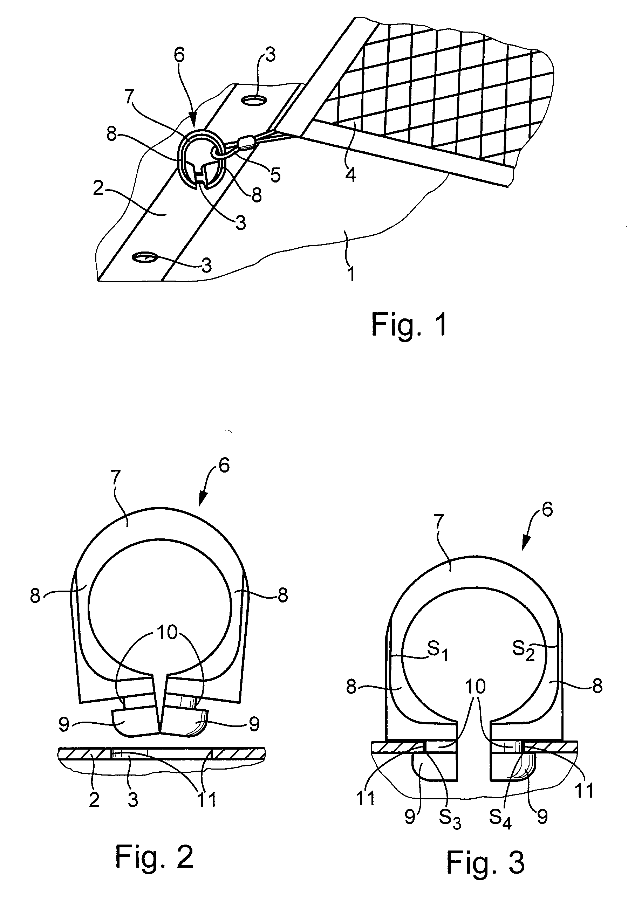

Eine Haltevorrichtung 6 gemäß den Fig. 1 bis 3 dient zur Festlegung von Funktionsteilen in einem Laderaum 1 eines Kraftfahrzeugs, vorzugsweise eines Personenkraftwagens. Als Funktionsteil ist vorliegend ein auf dem Laderaumboden 1 aufspannbares Sicherungsnetz 4 vorgesehen, das an seinen Ecken jeweils eine Schlaufe 5 aufweist, die als Befestigungsmittel für das Sicherungsnetz 4 dient und mit der Haltevorrichtung 6 verbindbar ist. Auch die anderen Ecken des Sicherungsnetzes 4 sind mittels entsprechender Befestigungsschlaufen und Haltevorrichtungen 6 am Laderaumboden 1 gesichert.

Die Haltevorrichtung 6 ist beim dargestellten Ausführungsbeispiel gemäß den Fig. 1 bis 3 als einstückiges Kunststoffbauteil in Form eines Halteclips gestaltet. Der Halteclip weist in seinem oberen Bereich einen bogenförmig gekrümmten, formsteifen Querabschnitt 7 auf, der sich an seinen Enden absatzlos in zwei nach unten ragende Tragschenkel 8 fortsetzt. Die Tragschenkel 8 sind an ihren unteren Enden mit entgegengerichtet zueinander nach außen weisenden Rastnasen 9 versehen. Die Rastnasen 9 sind in Abstand unterhalb jeweils einer flächigen Auflageseite jedes Tragschenkels 8 positioniert, wobei die Tragschenkel 8 mit ihren Auflageseiten auf der entsprechenden Oberfläche des Laderaumbodens 1 im montierten Zustand abstützen. Zwischen den Rastnasen 9 und den Auflageseiten verbleibt jeweils ein Einschnürungsabschnitt 10, der an seinen Abmessungen an eine vorliegend als Durchtritt gestaltete Aufnahme 3 im Laderaumboden 1 angepasst ist. Die Aufnahme 3 ist als kreisförmiger Durchtritt ausgeführt und ist in einer Schiene 2 vorgesehen, die mit ihrer Oberseite bündig mit dem Laderaumboden 1 abschließt und rohbauseitig mit der Fahrzeugkarosserie fest verbunden ist.

Die Innenseiten der Tragschenkel 8 und des Querabschnittes 7 bilden einen etwa kreisförmigen Durchtritt, der ein Befestigungsauge für die Schlaufe 5 darstellt. Der Halteclip 6 ist somit als nach unten offenes Bügelelement gestaltet, so dass eine entsprechende Schlaufe 5 in einfacher Weise über einen der beiden Tragschenkel 8 in das Befestigungsauge eingehängt werden kann und gleicher Weise auch wieder entfernt werden kann.

Wie anhand der Fig. 3 erkennbar ist, ist die in der Zeichenebene verlaufende Länge des Querabschnittes 7, die auch als seine Breite bezeichnet werden kann, wesentlich größer als der Durchmesser der Aufnahme 3, d.h. der Abstand zweier gegenüberliegender Randabschnitte 11 zueinander. Da der Querabschnitt 7 formsteif gestaltet ist, werden sich die Tragschenkel 8 etwa auf Höhe der Drehpunkte S₂ bei entsprechenden Druckbelastungen von außen her elastisch nach innen bewegen. Auf Höhe dieser Drehpunkte S₁, S₂ befindet sich auch der dünnste Querschnitt jedes Tragschenkels 8, so dass eine elastische Beweglichkeit um diesen geschwächten Bereich herum gegeben ist. Der Durchmesser der Einschnürungsabschnitte 10 - im unbelasteten Zustand der Haltevorrichtung 6 gesehen - ist lediglich geringfügig kleiner als der Durchmesser der Aufnahme 3, so dass die Haltevorrichtung 6 im montierten Zustand im wesentlichen spielfrei in der Aufnahme 3 sitzt. Auch der Abstand der Rastnasen 9 zu den nicht näher bezeichneten, unteren Auflageseiten der Tragschenkel 8 ist auf die Dicke der Schiene 2 abgestimmt, so dass sich auch in Hochrichtung eine Spielfreiheit ergibt. Wie anhand der Fig. 3 zusätzlich erkennbar ist, sind die unteren Auflageseiten zudem etwas angeschrägt, so dass sich im Bereich der Einschnürungsabschnitte 10 im montierten Zustand eine Klemmung auf den Randabschnitten 11 der Aufnahme 3 für den Halteclip 6 ergibt. Da der Abstand der imaginären Drehpunkte S₁, S₂ der Tragschenkel 8 wesentlich größer ist als der Abstand der imaginären Punkte S₃, S₄, der etwa dem Durchmesser der Aufnahme 3 und dem der gegenüberliegenden Einschnürungsabschnitte 10 entspricht, wird aufgrund der entsprechenden Drehmomente und auftretenden Kräfte bei einer Zugbelastung auf den Halteclip 6 nach oben ein Drehmoment auf die Tragschenkel 8 im Bereich der Rastnasen 9 jeweils nach außen erfolgen, so dass sie die Rastkraft der die Randabschnitte 11 der Aufnahme 3 hintergreifenden Rastnasen 9 erhöhen wird. Für ein erneutes Demontieren des Halteclips 6 wird in einfacher Weise von außen - vorzugsweise von Hand - jeweils eine Druckbelastung auf die gegenüberliegenden Tragschenkel 8 ausgeübt, wodurch die Tragschenkel 8 nach innen gedrückt werden und der Halteclip 6 nach oben gemäß Fig. 2 entfernt werden kann. Um eine entsprechende Montage und Demontage zu ermöglichen, ist der Abstand der gegen- überliegenden Außenkonturen der Rastnasen 9 im zusammengedrückten und aneinanderliegenden Zustand gemäß Fig. 2 geringfügig kleiner als der Durchmesser der Aufnahme 3.

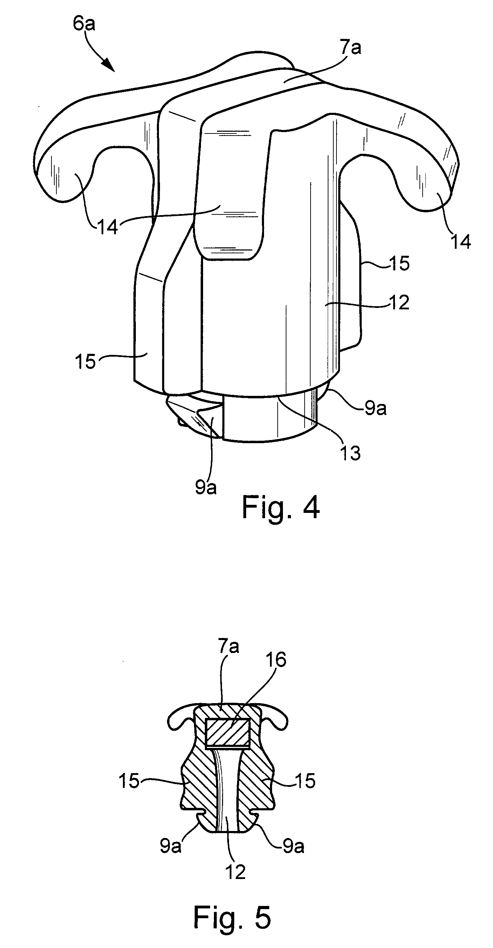

Beim Ausführungsbeispiel nach den Fig. 4 und 5 ist eine Haltevorrichtung 6a vorgesehen, die als zweiteiliger Halteclip gestaltet ist. Der Halteclip 6a setzt sich zusammen aus einem Bügelelement ähnlich dem Halteclip 6 nach den Fig. 1 bis 3 und aus einem Stützelement 12, das mit Funktionshalterungen in Form von vier Hakenfortsätzen 14 versehen ist. Das Stützelement weist einen am Außenumfang abschnittsweise zylindrischen Grundkörper auf, an dem die Hakenfortsätze 14 im oberen Bereich einstückig angeformt sind. In der Mitte ist das Stützelement 12 über seine gesamte Länge geschlitzt, wobei die entstehenden, etwa halbzylindrischen Hälften des Stützelementes 12 lediglich in einem oberen Bereich durch einen Stützkörperabschnitt 16, der block- oder quaderförmig gestaltet ist, einstückig und starr miteinander verbunden sind. Das Stützelement 12 weist einen abgestuften, bodenseitigen Stützbereich 13 auf, der sich außen auf dem Rand der Aufnahme 3 abstützt. Denn die Haltevorrichtung 6a kann analog zu dem Halteclip 6 in gleicher Weise in den Aufnahmen 3 der Schiene 2 des Laderaumbodens 1 nach Fig. 1 montiert und demontiert werden, wie dies anhand der Fig. 1 bis 3 für den Halteclip 6 bereits beschrieben worden ist. Um die Rastverbindung des Stützelementes 12 in der Aufnahme 13 zu erzielen, ist in dem Stützelement 12 das Bügelelement 7a, 9a, 15 räumlich integriert, das als separates Bauteil hergestellt ist. Sowohl das Stützelement 12 als auch das Bügelelement 7a, 9a, 15 sind jeweils aus einem geeigneten Kunststoff hergestellt. Die Funktion des Bügelelementes 7a, 9a, 15 entspricht im wesentlichen dem Halteclip 6, so dass nachfolgend auf die Ausführungen zu den Fig. 1 bis 3 verwiesen werden kann. Wesentlicher Unterschied ist es jedoch, dass die Formsteifigkeit des Querabschnittes 7a des Bügelelementes zumindest ergänzend durch den Stützkörperabschnitt 16 erzielt wird, der in seiner Außenkontur auf die Innenseiten des Bügelelementes im Bereich des Querabschnittes 7a sowie der oberen Teile der Tragschenkel 15 derart abgestimmt ist, dass er bündig und flächig an diesen Innenseiten anliegt. Die unteren Bereiche der Tragschenkel 15, die auch mit entsprechenden Griffkonturen zum elastischen Zusammendrücken von Hand versehen sind, sind für sich ebenfalls steif gestaltet, so dass sich der geschwächte und den imaginären Drehpunkt bildende Bereich der Tragschenkel 15 noch etwa auf Höhe des Stützkörperabschnittes 16 bzw. knapp unterhalb des Stützkörpersabschnittes 16 ergibt. Grundsätzlich ist es auch möglich, den Querabschnitt 7a bei dem Ausführungsbeispiel nach den Fig. 4 und 5 nicht besonders formsteif zu gestalten, da der Stützkörperabschnitt 16 durch seine formschlüssige Einpassung indirekt die Formsteifigkeit des Querabschnittes 7a erzielt, sobald das Bügelelement auf den quaderförmigen Stützkörperabschnitt 16 zwischen den beiden Stützelementhälften 12 aufgeschoben ist. Zum Aufschieben und Lösen des Bügelelementes relativ zum Stützkörperabschnitt 16 wird das Bügelelement vorzugsweise von der Seite her auf die oberen und unteren Längsseiten des Stützkörperabschnittes 16 aufgeschoben und anschließend um 90° nach unten gedreht. Bei einem Entfernen erfolgt selbstverständlich zunächst das Zurückdrehen um 90° nach oben und anschließend das seitliche Entfernen.

Wesentlich ist es somit beim Ausführungsbeispiel nach den Fig. 4 und 5, dass der Stützkörperabschnitt 16 eine - auf die Zeichnungsebene bezogene - Breite aufweist, die größer ist als der Durchmesser der Aufnahme 3 und der Abstand der Einschnürungsabschnitte oberhalb der Rastnasen 9a zueinander, um die gewünschte Erhöhung der Rastkraft bei Zugbelastungen auf das Stützelement 12 zu erzielen. Um eine ständige Anlage der Einschnürungsabschnitte an den Randabschnitten der Aufnahme 3 zu erzielen, kann es beim Ausführungsbeispiel nach den Fig. 4 und 5 ergänzend vorgesehen sein, einen elastisch nachgiebigen Füllkörper in das Stützelement 12 zwischen die gegenüberliegenden Tragschenkel 15 einzuschieben, der ständig einen gewissen elastischen Druck nach außen auf die Tragschenkel 15 und damit auch auf die Rastnasen 9a ausübt.

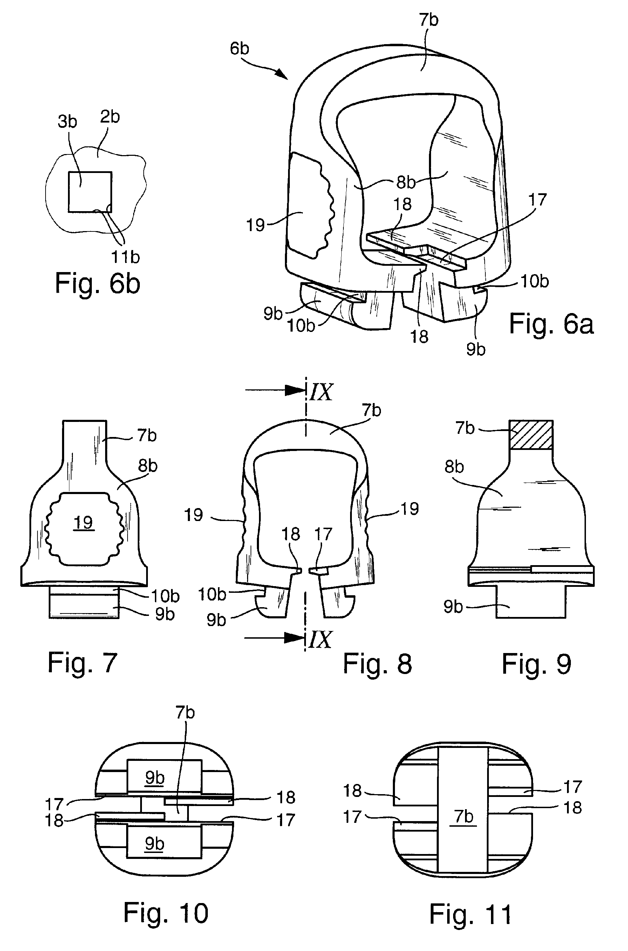

Eine Haltevorrichtung in Form eines einteiligen Halteclips 6b ist ähnlich dem Halteclip 6 nach den Fig. 1 bis 3 gestaltet. Funktionsgleiche Bereiche oder Teile sind mit den gleichen Bezugszeichen, lediglich unter Hinzufügung des Buchstaben "b" versehen. Auch der Halteclip 6b weist einen steifen Querabschnitt 7b auf, an den auf beiden Seiten zwei Tragschenkel 8b anschließen, die parallel zu einer Seite von dem Querabschnitt 7b abragen. Die Tragschenkel 8b gehen mittels eines einstückigen, nicht näher bezeichneten Absatzes jeweils in ein Rastelement in Form einer Rastnase oder eines Rasthakens 9b über. Die beiden Rastnasen sind, wie insbesondere anhand der Fig. 8 erkennbar ist, unterhalb den Tragschenkeln 8b und gegenüber der Flucht der Tragschenkel 8b zur Mitte nach innen versetzt angeordnet. Die die Rastnasen 9b und die Tragschenkel 8b einstückig miteinander verbindenden Absätze ragen somit gegenüber den Tragschenkeln 8b nach innen zur Mitte. Jeder Absatz ist mit jeweils einer Zentrierhilfe 17, 18 versehen, die aus einem Zentriersteg 18 an dem einen Absatz und einer Zentrieraufnahme 17 an dem anderen Absatz zusammengesetzt sind. Jeder Absatz weist über die Hälfte seiner Breite den Zentriersteg 18 und seitlich benachbart die Zentrieraufnahme 17 auf. Die Breite der Rastnasen 9b ist gegenüber den Absätzen reduziert, wie anhand der Fig. 7 und 9 oder 10 gut erkennbar ist. Zwischen den Absätzen und den Rastnasen 9b ergeben sich schlitz- oder nutförmige Einschnürungsabschnitte 10b.

Wie anhand der Fig. 6a und 10 erkennbar ist, weisen die Rastnasen 9b eine jeweils rechteckige Grundfläche auf. Seitlich außen an den Tragschenkeln 8b sind Griffflächen 19 vorgesehen, über die der Halteclip 6b im Bereich seiner Tragschenkel 8b derart elastisch zusammendrückbar ist, dass die beiden Rastnasen 9b aufeinander zubewegt werden. Die Querschnitte und Grundflächen der Rastnasen 9b sind auf einen Durchtrittsquerschnitt einer Aufnahme 3b in einem Laderaumboden 2b abgestimmt, der viereckig, vorliegend quadratisch gestaltet ist. Die Aufnahme 3b ist durch entsprechende Randabschnitte 11b begrenzt.

Zum Einsetzen des Halteclips in die Aufnahme 3b werden die beiden Tragschenkel 8b nach innen gedrückt. Die Breite der Rastnasen 9b ist geringfügig kleiner als die Seitenlänge der Randabschnitte 11b, so dass die Rastnasen 9b durch die Aufnahme 3b im zusammengedrückten Zustand der Tragschenkel 8b hindurchgeführt werden können. Sobald die Unterseite der Absätze des Halteclip 6b auf der Oberfläche des Laderaumbodens 2b aufliegt, kann die Druckkraft auf die Tragschenkel 8b weggenommen werden. Die Tragschenkel 8b drängen in ihre unbelastete Ruheposition nach außen zurück. Dadurch hintergreifen auf zwei gegenüber liegenden Seiten die beiden Rastnasen 9b die Unterseiten der gegenüberliegenden Randabschnitte 11b. Die wechselweise positionierten Zentrierstege 18 und Zentrieraufnahmen 17 gewährleisten, dass beim Zusammendrücken der beiden Tragschenkel 8b die Rastnasen 9b auf gleicher Höhe zusammengedrückt werden, so dass ein schräges Zusammendrücken der Tragschenkel 8b und der Rastnasen 9b, das zu einem in der Höhe versetzten Berühren der beiden Rastnasen 9b miteinander führen würde, vermieden wird. So ist gewährleistet, dass beide Rastnasen 9b gleichmäßig und reproduzierbar die entsprechenden Randabschnitte 11b der jeweiligen Aufnahme 3b beim Einsetzen hintergreifen. Da die Einschnürungsabschnitte 10b im montierten Zustand des Halteclip 6b formschlüssig an den gegenüberliegenden Randkanten der Randabschnitte 11b anliegen, ist ein Verdrehen des Halteclip 6b relativ zu seiner Mittelhochachse, die der Montageachse entspricht, ausgeschlossen.

Wie anhand der Fig. 8 und 9 gut erkennbar ist, ist der formstabile Querschnitt 7b mit einer größeren Materialstärke versehen als der jeweilige Übergangsbereich zu den Tragschenkeln 8b. Dadurch wird zwangsläufig an den Außenseiten des Querabschnittes 7b jeweils ein Gelenkpunkt für die elastische Beweglichkeit der Tragschenkel 8b definiert. Vorliegend werden die Gelenkpunkte durch horizontale, zueinander parallele Schwenkachsen im Übergangsbereich zum jeweiligen Tragschenkel 8b gebildet, um die die Tragschenkel 8b einschließlich der Rastnasen 9b und der die Zentrierhilfen 17, 18 beherbergenden Absätze elastisch nach innen schwenkbar sind. Im unbelasteten Ruhezustand sind die Tragschenkel 8b und die Rastnasen 9b gemäß der Darstellung nach Fig. 8 positioniert.

## Patentansprüche

1. Haltevorrichtung mit wenigstens einer Funktionshalterung, an der auf Zug belastete Befestigungsmittel festlegbar sind, sowie mit einer Sicherungseinheit zum Montieren der Haltevorrichtung in einer stationären Aufnahme, wobei die Sicherungseinheit wenigstens zwei zueinander beabstandete Rastnasen aufweist, die im montierten Zustand korrespondierende Randabschnitte der Aufnahme hintergreifen,
**dadurch gekennzeichnet, dass**
die Rastnasen (9, 9a, 9b) an elastisch beweglichen Tragschenkeln (8, 8a, 8b, 15) angeordnet sind, die über einen zumindest im montierten Zustand formsteifen Querabschnitt (7, 7a, 7b) miteinander verbunden sind, und dass die Erstreckung der Aufnahme (3, 3b) zwischen den Randabschnitten (11, 11b) kleiner ist als die gleichgerichtete Abmessung des Querabschnittes (7, 7a, 7b).

2. Haltevorrichtung nach Anspruch 1, **dadurch gekennzeichnet, dass** der formsteife Querabschnitt (7, 7a, 7b), die Tragschenkel (8, 8b, 15) und die Rastnasen (9, 9a, 9b) als einstückiges Bügelelement gestaltet sind.

3. Haltevorrichtung nach Anspruch 2, **dadurch gekennzeichnet, dass** an dem Bügelelement die wenigstens eine Funktionshalterung einstückig angeformt ist.

4. Haltevorrichtung nach Anspruch 3, **dadurch gekennzeichnet, dass** das Bügelelement als Funktionshalterung ein Befestigungsauge aufweist, das durch einen Freiraum unterhalb des Querabschnittes (7, 7b) und zwischen den Tragschenkeln (8, 8b) gebildet ist.

5. Haltevorrichtung nach Anspruch 1, **dadurch gekennzeichnet, dass** der formsteife Querabschnitt (7, 7a, 7b) eine größere Materialstärke aufweist als die Tragschenkel (8, 8a, 8b).

6. Haltevorrichtung nach Anspruch 1, **dadurch gekennzeichnet, dass** die Aufnahme (3b) einen rotationsunsymmetrischen Durchtrittsquerschnitt aufweist und dass die Rastnasen (9b) derart formschlüssig an den Durchtrittsquerschnitt angepasst sind, dass die Rastnasen (9b) im montierten Zustand - bezogen auf eine Mittelachse der Aufnahme (3b) - verdrehgesichert in der Aufnahme (3b) gehalten sind.

7. Haltevorrichtung nach Anspruch 2, **dadurch gekennzeichnet, dass** die Funktionshalterung (14) an einem zu dem Bügelelement getrennten Stützelement (12) angeformt ist, das mit einem bodenseitigen Stützbereich (13) zur Auflage auf den Randabschnitten (11) der Aufnahme (3) versehen ist, und dass das Bügelelement (7a, 9a, 15) das Stützelement (12) im montierten Zustand übergreift.

8. Haltevorrichtung nach Anspruch 7, **dadurch gekennzeichnet, dass** das Stützelement einen Stützkörperabschnitt (16) aufweist, der im montierten Zustand für den Querabschnitt (7a) des Bügelelementes eine flächige, formsteife Anlage bildet.

9. Haltevorrichtung nach Anspruch 8, **dadurch gekennzeichnet, dass** das Bügelelement (7a, 9a, 15) räumlich in dem Stützelement (12) integriert ist.

10. Haltevorrichtung nach Anspruch 7, **dadurch gekennzeichnet, dass** an dem Stützelement (12) als Funktionshalterung mehrere nach außen abragende Hakenfortsätze (14) vorgesehen sind.
